# EUROPÄISCHE PATENTSCHRIFT

(11) **EP 1 178 632 B1**
(45) Veröffentlichungstag und Bekanntmachung des Hinweises auf die Patenterteilung: **08.06.2005**
(21) Anmeldenummer: 01118626.9
(22) Anmeldetag: 02.08.2001
(51) Int. Cl.: H04L 12/403

(54) **Zyklisches Busübertragungsverfahren**
Method for cyclic bus transmission
Procédé de transmission cyclique par bus

(30) Priorität: 04.08.2000 DE 10038155
(43) Veröffentlichungstag der Anmeldung: 06.02.2002
(73) Patentinhaber: SIEMENS AKTIENGESELLSCHAFT, 80333 München (DE)
(72) Erfinder: Steindl, Günter, 92284 Poppenricht (DE)

(56) Entgegenhaltungen:
- EP-A- 0 674 410
- EP-A- 0 715 261
- DE-A- 19 721 740
- US-A- 5 761 430
- VOLZ M: "PROFIBUS-DP - DER SCHNELLE BRUDER STANDARDISIERTE KOMMUNIKATION FUR DIE DEZENTRALE PERIPHERIE" ELEKTRONIK, FRANZIS VERLAG GMBH. MUNCHEN, DE, Bd. 42, Nr. 26, 28. Dezember 1993 (1993-12-28), Seiten 50-53,58-60, XP000421408 ISSN: 0013-5658
- CENA G ET AL: "Standard field bus networks for industrial applications" COMPUTER STANDARDS AND INTERFACES, ELSEVIER SEQUOIA. LAUSANNE, CH, Bd. 17, Nr. 2, 15. Januar 1995 (1995-01-15), Seiten 155-167, XP004046736 ISSN: 0920-5489
- KLEHMET U ET AL: "LEISTUNGSBEWERTUNG DER FELDBUS-PROTOKOLLE PROFIBUS UND FIP (TEIL 1). \THE FIELDBUS PROTOCOL STANDARDS PROFIBUS AND FIP: A PERFORMANCE COMPARISON (PART 1)" AUTOMATISIERUNGSTECHNISCHE PRAXIS - ATP, OLDENBOURG VERLAG. MUNCHEN, DE, Bd. 35, Nr. 6, 1. Juni 1993 (1993-06-01), Seiten 355-360, XP000382391 ISSN: 0178-2320

## Beschreibung

Die Erfindung betrifft ein Verfahren zur zyklischen Kommunikation zwischen zur Steuerung oder Überwachung eines technischen Prozesses vorgesehenen Kommunikationsteilnehmern über einen Bus, bei dem während jeweils eines Buszyklusses für die Kommunikationsteilnehmer projektierte Kommunikationsbeziehungen abgewickelt werden.

Ein derartiges Kommunikationsverfahren ist aus der Norm EN 50 170 oder PROFIBUS-Norm bekannt. Der PROFIBUS ist ein so genannter Feldbus, der zur kommunikativen Verbindung von zur Automatisierung eines technischen Prozesses vorgesehenen Kommunikationsteilnehmern verwendet wird. Ein Kommunikationsteilnehmer an diesem oder einem ähnlichen Bus ist z.B. eine so genannte speicherprogrammierbare Steuerung (SPS). Ein weiterer Kommunikationsteilnehmer am Bus ist z.B. ein so genanntes dezentrales Peripheriegerät, an das externe Sensorik oder Aktorik zur Steuerung oder Überwachung des technischen Prozesses anschließbar ist.

Die Steuerung eines technischen Prozesses schließt häufig auch Regelungsaufgaben ein. Dabei umfasst die Regelung das Aufnehmen eines Messwertes aus dem technischen Prozess und das Ausgeben einer Steuerinformation an den technischen Prozess. Sowohl das Aufnehmen des Messwertes als auch das Ausgeben der Steuerinformation erfolgt üblicherweise zyklisch. Da somit der Messwert nicht kontinuierlich, sondern nur jeweils zum Zeitpunkt seiner Aufnahme, d. h. zum Abtastzeitpunkt zur Verfügung steht, handelt es sich um eine Abtastregelung, deren Güte oder Stabilität maßgeblich von der Äquidistanz der Abtastzeitpunkte abhängt.

Häufig wird der Messwert aus dem Prozess von einem ersten Kommunikationsteilnehmer aufgenommen und von einem zweiten Kommunikationsteilnehmer verarbeitet. Dieser zweite Kommunikationsteilnehmer generiert auch anhand des Messwertes die auszugebende Steuerinformation. Die Steuerinformation wird dann von einem dritten Kommunikationsteilnehmer an den Prozess ausgegeben. Damit ist der Abstand zwischen zwei Abtastzeitpunkten und daher die Abtastfrequenz durch die Dauer der Kommunikation zwischen den jeweiligen Kommunikationsteilnehmern bestimmt.

Zur Gewährleistung einer Äquidistanz der Abtastzeitpunkt ist z.B. beim PROFIBUS eine konstante Buszykluszeit vorgesehen. Die Buszykluszeit ist derjenige Zeitabschnitt, im dem sämtliche für die an den Bus angeschlossenen Kommunikationsteilnehmer projektierten zyklischen Kommunikationen genau einmal abgewickelt werden. Ein Kommunikationsverfahren mit konstanter Buszykluszeit ist Gegenstand der am 20.08.1999 angemeldeten deutschen Patentanmeldung 199 39 182.

Eine Kommunikation umfasst den Transfer eines Telegramms über den Bus vom sendenden zum empfangenden Kommunikationsteilnehmer. Diejenige Zeit, die für den Transfer eines Telegramms erforderlich ist, ist wesentlich durch die transferierte Datenmenge bestimmt. Die Datenmenge zyklischer Kommunikationen ist jedoch im Wesentlichen konstant. Damit ergibt sich bei konstanter Buszykluszeit eine näherungsweise Äquidistanz zwischen den einzelnen Kommunikationen. Mit einer näherungsweisen Äquidistanz der einzelnen Kommunikationen geht eine näherungsweise Äquidistanz der Abtastzeitpunkte einher, denn der aus dem Prozess aufgenommene Messwert ist ein Datum eines Telegramms. Zur Gewährleistung tatsächlicher Äquidistanz ist die Buszykluszeit länger als die Zeit, die für die Abwicklung sämtlicher projektierter Kommunikationen erforderlich wäre. Die zusätzliche Zeit steht als Reserve für Telegrammwiederholungen und so genannte azyklische Telegramme zur Verfügung. Sind in einem Buszyklus keine Telegrammwiederholungen erforderlich oder stehen keine azyklischen Telegramme zum Transfer an, so wird mit dem Beginn des nächsten Buszyklusses dennoch gewartet, bis die vorgegebene Buszykluszeit, ggf. inklusive der Reservezeit, verstrichen ist. Damit ergibt sich für die projektierten Kommunikationen ein festes Zeitraster, mit dem sich die Äquidistanz der Abtastungen gewährleisten lässt.

Nachteilig bei einem derartigen Kommunikationsverfahren ist jedoch, dass diese Äquidistanz im Falle einer Ausnahmekommunikation während eines Buszyklusses nicht mehr gewährleistet ist. Zur Unterscheidung werden die oben beschriebenen projektierten Kommunikationen im folgenden als Normalkommunikation bezeichnet. Demgegenüber sei eine Ausnahme- oder Sonderkommunikation eine Kommunikation, mit der z.B. Daten über die Funktionstüchtigkeit der einzelnen Kommunikationsteilnehmer transferiert werden. Eine derartige Ausnahmekommunikation ist nicht in jedem Buszyklus, sondern nur von Zeit zu Zeit erforderlich. Allerdings verändert eine Ausnahmekommunikation die Dauer des Buszyklusses.

Zudem wird gemäß der EN 50 170 die Normalkommunikation desjenigen Kommunikationsteilnehmers, der ein Telegramm einer Ausnahmekommunikation sendet, bis zum nächsten Buszyklus ausgesetzt. Dies führt zum einen dazu, dass jede im Buszyklus nach der Ausnahmekommunikation abgewickelte Normalkommunikation eines Kommunikationsteilnehmers im Vergleich zu einem "normalen" Buszyklus ohne Ausnahmekommunikation zeitversetzt ist. Der Zeitversatz ergibt sich aus der Differenz der Dauern der Normal- bzw. Ausnahmekommunikation des Kommunikationsteilnehmers, der eine Ausnahmekommunikation durchführt. Ist die Dauer der Ausnahmekommunikation größer als die Dauer der Normalkommunikation, erfolgt die nach der Ausnahmekommunikation abgewickelte Normalkommunikation weiterer Kommunikationsteilnehmer "verspätet". Ist dagegen die Dauer der Ausnahmekommunikation kleiner als die Dauer der Normalkommunikation, so erfolgt die nach der Ausnahmekommunikation abgewickelte Normalkommunikation weiterer Kommunikationsteilnehmer entsprechend "verfrüht". Eine Äquidistanz der Abtastzeitpunkte ist nicht mehr gewährleistet. Damit sinkt auch die Güte einer Regelung. Im Extremfall kann sogar die Stabilität der Regelung in Frage gestellt sein.

Die DE 197 21 740 A1 beschreibt ein Steuerungsverfahren für den Medienzugriff bei einem seriellen Bus mit mehreren Teilnehmern. Die einzelnen Teilnehmer kommunizieren über Datentelegramme. Um einzelne Teilnehmer zu bestimmten Zeitpunkten auf den Bus zugreifen zu lassen, werden von einem als Master ausgebildeten ersten Teilnehmer in zyklischer Folge Triggertelegramme gesendet. Jedes Triggertelegramme enthält den Beginn und die Dauer der Sendeberechtigung mindestens für von dem ersten Teilnehmer ausgewählte Teilnehmer. Im Anschluss an ein Triggertelegramm werden von den ausgewählten Teilnehmern in dem durch das Triggertelegramm festgelegten Zeitablauf Datentelegramme gesendet. Vor dem Senden des nächsten Triggertelegramms ist ein Zeitraum vorgesehen, innerhalb dessen die Teilnehmer eine Sendeberechtigung für Datentelegramme anfordern oder Statusmeldungen abgeben können.

Die EP 0 715 261 A1 beschreibt einen Zuteiler, welcher die Datenkommunikation in einem seriellen Bussystem durch Zuteilung der zu übertragenden Daten zu einer von drei Kategorien organisiert. Es wird zwischen periodischer Datenkommunikation, welche im Normalfall isochrone Kommunikation darstellt, aperiodischer Kommunikation, welche im Normalfall asynchrone Kommunikation darstellt und Steuerungskommunikation unterschieden. Der Zuteiler arbeitet im Wesentlichen auf einer periodischen Basis. Zu Beginn jeder Periode wechselt der Zuteiler vorzugsweise zwischen periodischer und Steuerungskommunikation. Wenn die periodische Kommunikation abgeschlossen ist, veranlasst der Zuteiler die vorgesehenen asynchronen Übertragungen im Wechsel mit verbliebener Steuerungskommunikation. Der Zuteiler behandelt die periodischen Ereignisse vorrangig und teilt eventuell verbliebene Zeit innerhalb einer Periode den Steuerungsmeldungen bzw. den verbliebenen periodischen Meldungen, bis diese alle vollständig übermittelt sind. Eventuell verbliebene Zeit innerhalb der Periode wird für die Übertragung von aperiodischen Meldungen benutzt. Gemäß einer vorteilhaften Ausgestaltung ermittelt der Zuteiler die jeweils verbliebene freie Zeit innerhalb einer Periode um bestimmen zu können, ob zusätzliche Steuerungs- bzw. aperiodische Übertragungen durchgeführt werden können.

Der Erfindung liegt daher die Aufgabe zugrunde, ein Kommunikationsverfahren zu schaffen, mit dem in besonders effektiver Art und Weise eine äquidistante Messwertabtastung eines technischen Prozesses möglich ist.

Diese Aufgabe wird erfindungsgemäß gelöst durch die Merkmale des Anspruchs 1. Vorteilhafte Ausgestaltungen sind Gegenstand der Unteransprüche.

Zur zyklischen Kommunikation zwischen zur Steuerung oder Überwachung eines technischen Prozesses vorgesehenen Kommunikationsteilnehmern über einen Bus werden während jeweils eines Buszyklusses, dessen Dauer vorgegeben ist, Kommunikationsbeziehungen abgewickelt, die für die Kommunikationsteilnehmer projektiert wurden. Die projektierten Kommunikationsbeziehungen werden während einer Dauer eines Normalkommunikationsteils des Buszyklusses abgewickelt, wobei die Zeitdifferenz zwischen Dauer des Buszyklusses und Dauer des Normalkommunikationsteils für einen Ausnahmekommunikationsteil zur Verfügung steht und eine Ausnahmekommunikation während der Dauer des Ausnahmekommunikationsteils abgewickelt wird.

Die mit der Erfindung erzielten Vorteile bestehen insbesondere darin, dass durch die Aufteilung des Buszyklusses in Normal- und Ausnahmekommunikationsteil die im Normalkommunikationsteil abgewickelten projektierten Kommunikationsbeziehungen völlig von eventuellen Ausnahmekommunikationen entkoppelt sind.

Wenn unter den Kommunikationsteilnehmern mindestens ein Master und mindestens ein Slave ist, wobei der Master den mindestens einen Slave - oder im Falle mehrerer Slaves jeden Slave - entsprechend der projektierten Kommunikationsbeziehungen während eines Buszyklusses zumindest einmal anspricht und damit eine Reaktion des jeweiligen Slaves auslöst sowie die Dauer des Normalkommunikationsteils durch die Dauer der Kommunikationen entsprechend der projektierten Kommunikationsbeziehungen bestimmt ist, steht die Dauer des Normalkommunikationsteils bereits nach einmaliger Abwicklung sämtlicher projektierter Kommunikationsbeziehungen im Wesentlichen fest. Ausgehend von der mit dieser Dauer korrespondierenden minimalen Dauer eines Buszyklusses ist eine Dauer für den Buszyklus vorgebbar, innerhalb derer sämtliche projektierten Kommunikationsbeziehungen abwickelbar sind. Die Dauer des Buszyklusses kann damit optimal eingestellt werden.

Nachdem die Dauer des Buszyklusses konstant ist, ist es wesentlich, dass einerseits eine ausreichende Dauer des Buszyklusses derart vorgegeben wird, dass sämtliche projektierten Kommunikationsbeziehungen abwickelbar sind. Andererseits soll die Dauer aber auch möglichst kurz sein, damit der Datenaustausch zwischen den Kommunikationsteilnehmern ausreichend häufig stattfinden kann. Die Dauer des Normalkommunikationsteils während des ersten Buszyklusses - oder ggf. der Mittelwert während der ersten Buszyklusse - zuzüglich einem Toleranzwert von z.B. 5% bis 15% kann zur Vorgabe der Dauer des Buszyklusses herangezogen werden. Die feste Buszykluszeit ist damit auch automatisch, insbesondere ohne Eingriff eines Benutzers, einstellbar. Sie kann jedoch von diesem ggf. manuell angepasst werden.

Entsprechend einer projektierten Kommunikationsbeziehung findet ein Datenaustausch zwischen den betreffenden Kommunikationsteilnehmern statt. Der Datenaustausch erfolgt mittels eines Telegramms. Im folgenden werden die Begriffe Kommunikation und Telegramm daher synonym gebraucht. Wenn der Master einen Slave anspricht, erfolgt dies mittels eines Telegramms. Der Slave reagiert auf diesen Stimulus seinerseits mit einem Telegramm.

Wenn die Ausnahmekommunikation durch den Master bei dem mindestens einen Slave initiiert wird, wird eine Ausnahmekommunikation nur von gleichsam "zentraler Stelle", nämlich dem Master, ausgelöst. Der Master koordiniert die Kommunikation über den Bus. Initiiert der Master die Ausnahmekommunikation, so ist gewährleistbar, dass eine Ausnahmekommunikation nur dann erfolgt, wenn entweder die Normalkommunikation des jeweiligen Buszyklusses noch nicht begonnen hat oder bereits abgeschlossen ist.

Umfasst die Ausnahmekommunikation, also das im Weg der Ausnahmekommunikation übertragene Telegramm, Diagnosedaten des angesprochenen Slaves, so ist eine Kontrolle eines Kommunikationsteilnehmers möglich. Diese Kontrolle kann sich z.B. auf die Funktionstüchtigkeit des Kommunikationsteilnehmers beziehen. Besonders vorteilhaft ist, dass diese Kontrolle ohne Unterbrechung des laufenden Betriebs der beispielsweise den technischen Prozess steuernden Kommunikationsteilnehmer möglich ist.

Wenn der Ausnahmekommunikationsteil im Anschluss an den Normalkommunikationsteil vorgesehen ist, ist eine Äquidistanz der Normalkommunikation während des Normalkommunikationsteils gewährleistet, ohne dass die Dauer des Ausnahmekommunikationsteils fest vorgegeben werden muss. Dies soll anhand eines Zahlenbeispiels verdeutlicht werden. Die konstante Buszykluszeit und damit die Dauer eines Buszyklusses beträgt z.B. 100ms. Wenn die Dauer des Normalkommunikationsteils im Mittel 80ms bis 85ms beträgt, verbleibt in jedem Buszyklus nach dem Normalkommunikationsteil eine Zeitspanne von etwa 15ms bis 20ms für Ausnahmekommunikationen. Ob während eines Buszyklusses Ausnahmekommunikationen abgewickelt werden, ist nicht vorhersehbar. Wenn der Ausnahmekommunikationsteil dagegen vor dem Normalkommunikationsteil vorgesehen ist, kann eine dann fest vorzugebende Dauer des Ausnahmekommunikationsteils, z.B. 20ms, ausgeschöpft sein.

Liegt die Dauer des Normalkommunikationsteils während dieses Buszyklusses dann mit 85ms am oberen Ende der festgestellten Dauern, so ergibt sich eine Buszykluszeit von 105ms. Die Buszykluszeit wäre also nicht mehr konstant. Dies ist vermeidbar, wenn der Ausnahmekommunikationsteil im Anschluss an den Normalkommunikationsteil vorgesehen ist. Grund hierfür ist, dass dann nach einem 85ms dauernden Normalkommunikationsteil der Ausnahmekommunikationsteil nach weiteren 15ms abgebrochen und ein neuer Buszyklus gestartet wird. Die Buszykluszeit bleibt im Ergebnis konstant.

Wird die Ausnahmekommunikation für den Fall ausgesetzt, dass die Summe der Dauer des Normalkommunikationsteils und der Dauer des Ausnahmekommunikationsteils die vorgegebene maximale Buszykluszeit übersteigt, so ist frühzeitig bekannt, dass die Ausnahmekommunikation nicht abwickelbar war. Um eine Ausnahmekommunikation auszusetzen, wenn durch deren Dauer die Konstanz der Buszykluszeit in Frage gestellt würde, so sind an einer zentralen Stelle am Bus, z.B. durch den Master, die Buszykluszeit und/oder die Dauern von Normal- und Ausnahmekommunikationsteil sowie die Anzahl von Ausnahmekommunikationen zu überwachen.

Wenn bei der zentralen Stelle kurz vor Ende der Buszykluszeit noch Ausnahmekommunikationen bekannt sind, die im aktuellen Buszyklus nicht mehr abwickelbar sind, so ist auch sofort bekannt oder zumindest ermittelbar, welche Ausnahmekommunikationen ausgesetzt wurden. Die ausgesetzten Ausnahmekommunikationen können für eine spätere Abwicklung vorgesehen werden. Wären die ausgesetzten Ausnahmekommunikationen nicht auf diese Weise bekannt bzw. ermittelbar, müssten die ausgesetzten Ausnahmekommunikationen anhand fehlender Antworten oder Quittungen nach Verstreichen einer Wartezeit identifiziert werden. Dies würde einerseits erheblichen Mehraufwand bedeuten. Andererseits könnte erst nach Ende der Wartezeit eine Ausnahmekommunikation für eine spätere Abwicklung erneut vorgesehen werden.

Aufgrund der Vorgebbarkeit der Dauer des Ausnahmekommunikationsteils steht in jedem Buszyklus eine feste Zeitspanne zur Abwicklung von Ausnahmekommunikation zur Verfügung. Von den projektierten Kommunikationsbeziehungen zwischen den einzelnen Kommunikationsteilnehmern werden diejenigen, die z.B. Abtastwerte für eine Regelung liefern, möglichst früh im Buszyklus vorgesehen. Je sensibler eine Regelung auf Schwankungen der Abtastrate reagiert, desto früher wird diese Kommunikationsbeziehung innerhalb der Gruppe von Daten für eine Regelung liefernden Kommunikationsbeziehungen eingeplant.

Bei Beachtung dieses Konzeptes können Kommunikationen zum Ende des Normalkommunikationsteils die Äquidistanz einzelner Abtastzeitpunkte nicht mehr beeinflussen. Dies gilt auch dann, wenn zum Ende des Normalkommunikationsteils Kommunikationsbeziehungen abgewickelt werden, deren Dauer nicht vorhersehbar ist oder schwankt. Derartige Kommunikationen können bis zum Ende des Buszyklusses dauern. Wenn die Dauer des Ausnahmekommunikationsteils - und damit implizit auch die Dauer des Normalkommunikationsteils - vorgebbar ist, können solche Kommunikationen maximal bis zum Ende des Normalkommunikationsteils dauern. Damit ist gewährleistet, dass in jedem Buszyklus eine Zeitspanne zur Abwicklung von Ausnahmekommunikation verbleibt. Damit die Konstanz der Buszykluszeit insgesamt gewährleistet ist, wird für den Fall, dass die Dauer des Ausnahmekommunikationsteils die vorgegebene Dauer übersteigt, die Ausnahmekommunikation beendet und diese sowie jede dann noch anstehende Ausnahmekommunikation ausgesetzt.

Wenn eine Ausnahmekommunikation in einem Buszyklus ausgesetzt wurde, muss die Ausnahmekommunikation zu einem späteren Zeitpunkt neu eingeplant werden. Vorteilhaft wird eine in einem Buszyklus ausgesetzte Ausnahmekommunikation für den nächsten Buszyklus eingeplant, um die Zeitdifferenz zwischen Initiierung der Ausnahmekommunikation und Abwicklung der Ausnahmekommunikation möglichst gering zu halten.

Ein Sonderkommunikationsteil ermöglicht vorteilhaft die Abwicklung von Sonderkommunikation unabhängig von der Normal- und Ausnahmekommunikation. Ein Beispiel für Sonderkommunikation ist eine Telegrammwiederholung im Falle von Übertragungsproblemen während der Normalkommunikation. Ein weiteres Beispiel für Sonderkommunikation ist ein so genanntes azyklisches Telegramm, mit dem - unabhängig von einem projektierten Zeitraster - ereignisgesteuert Daten an einen Kommunikationsteilnehmer gesendet werden. Die Abwicklung von Sonderkommunikation unabhängig von der Abwicklung der Normalkommunikation ermöglicht die Gewährleistung der Äquidistanz der Abtastzeitpunkte auch im Falle von Übertragungsproblemen.

Ohne Sonderkommunikation wird bei einem Übertragungsproblem die gestörte Übertragung wiederholt. Sämtliche projektierten Kommunikationsbeziehungen die im Buszyklus zeitlich nach der Kommunikationsbeziehung vorgesehen sind, bei deren Abwicklung das Übertragungsproblem aufgetreten ist, werden verschoben. Eine Äquidistanz der Abtastzeitpunkt könnte nicht mehr gewährleistet werden. Die Äquidistanz ist dagegen wieder gewährleistbar, wenn Sonderkommunikation unabhängig von der Normalkommunikation in einem eigenen Sonderkommunikationsteil abgewickelt wird. Ist der Sonderkommunikationsteil im Anschluss an den Ausnahmekommunikationsteil vorgesehen, so ist die Äquidistanz der Normalkommunikation unabhängig von der Dauer des Sonderkommunikationsteils gewährleistbar.

Ausnahmekommunikationsteil und Sonderkommunikationsteil sind grundsätzlich austauschbar, wobei entweder der Ausnahme- oder der Sonderkommunikationsteil am Ende des Buszyklusses vorgesehen ist. Wenn der Ausnahmekommunikationsteil am Ende des Buszyklusses vorgesehen ist, findet Sonderkommunikation im Sonderkommunikationsteil zwischen Normal- und Ausnahmekommunikationsteil statt. Dann sind die Dauer des nach dem Normalkommunikationsteil vorgesehenen Sonderkommunikationsteils vorgegeben und die Dauer des am Ende des Buszyklusses vorgesehenen Ausnahmekommunikationsteils frei, jedoch durch die vorgegebene Buszykluszeit beschränkt.

Eine Sonderkommunikation wird vorteilhaft ausgesetzt, wenn die Summe der Dauer des Normalkommunikationsteils und der Dauer des Ausnahmekommunikationsteils sowie der Dauer des Sonderkommunikationsteils die vorgegebene maximale Buszykluszeit übersteigt. Damit ist gewährleistet, dass durch bedarfsweise abzuwickelnde Sonderkommunikation die Konstanz der Buszykluszeit nicht in Frage gestellt ist. Indem eine ausgesetzte Sonderkommunikation für den nächsten Buszyklus eingeplant wird, bleibt zudem die Zeitdifferenz zwischen vorgesehener und tatsächlicher Abwicklung der Sonderkommunikation so gering wie möglich.

Nachfolgend wird ein Ausführungsbeispiel der Erfindung anhand der Zeichnung näher erläutert. Darin zeigen:
- FIG 1: schematisch über einen Bus kommunikativ verbundene Kommunikationsteilnehmer zur Steuerung eines technischen Prozesses,
- FIG 2: ein Flussdiagramm für eine Automatisierung des technischen Prozesses,
- FIG 3a u. 3b: Kommunikationsbeziehungen zwischen einzelnen Kommunikationsteilnehmern,
- FIG 4: Zeitpunkte einzelner Kommunikationen während eines Buszyklusses auf einem Zeitstrahl,
- FIG 5: die Verlängerung eines Buszyklusses aufgrund einer Ausnahmekommunikation,
- FIG 6: die Aufteilung des Buszyklusses in einen Normalkommunikationsteil und einen Ausnahmekommunikationsteil, und
- FIG 7: die Aufteilung des Buszyklusses in einen Normal- und einen Ausnahme- sowie einen Sonderkommunikationsteil.

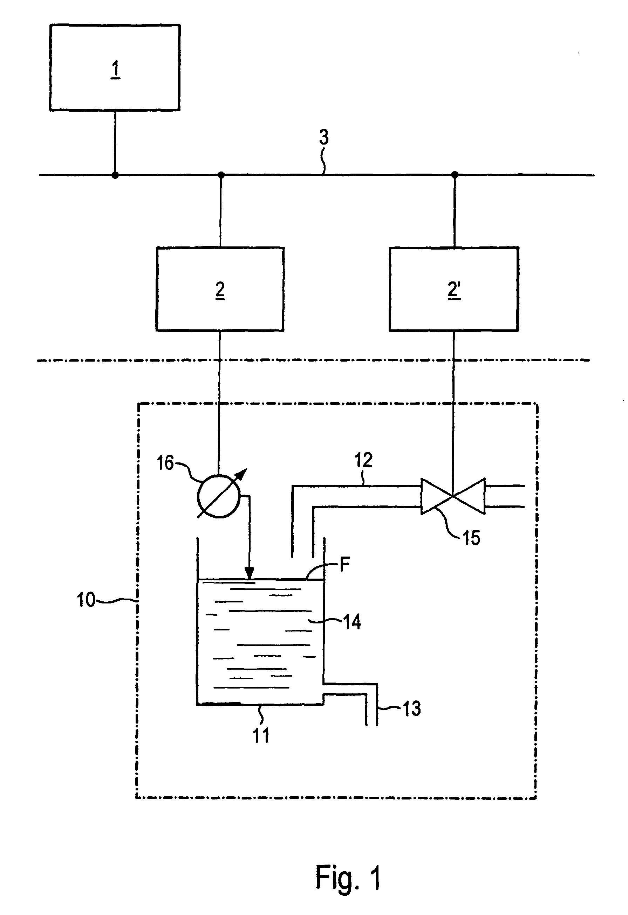

FIG 1 zeigt Kommunikationsteilnehmer 1, 2 und 2', wobei der Kommunikationsteilnehmer 1 ein so genannter Master und die mit Kommunikationsteilnehmer 2, 2' so genannte Slaves sind. Die Teilnehmer 1, 2, 2' sind über einen Bus 3 kommunikativ miteinander verbunden. Die Kommunikationsteilnehmer 1, 2, 2' sind zur Steuerung oder Überwachung eines schematisch dargestellten technischen Prozesses 10 vorgesehenen.

Ein Master 1 ist ein Kommunikationsteilnehmer, der am Bus 3 eine aktive Sendeberechtigung hat. Ein Slave 2, 2' sendet dagegen nur dann, wenn er zuvor vom Master 1 angesprochen wurde. Dem Slave 2, 2' fehlt damit gerade die aktive Sendeberechtigung, denn dieser reagiert nur auf eine Anforderung, d. h. auf das Ansprechen durch den Master 1.

Der technische Prozess 10 umfasst einen Reaktor 11 mit einem Zulauf 12 und einem Abfluss 13. Der Reaktor 11 wird durch den Zulauf 12 gespeist. Über den Abfluss 13 verlässt ein Reagenz 14 den Reaktor 11. Der Zulauf 12 wird durch ein Ventil 15 gesteuert. Mittels eines Füllstandsmessers 16 wird ein Füllstand F des Reaktors 11 ermittelt.

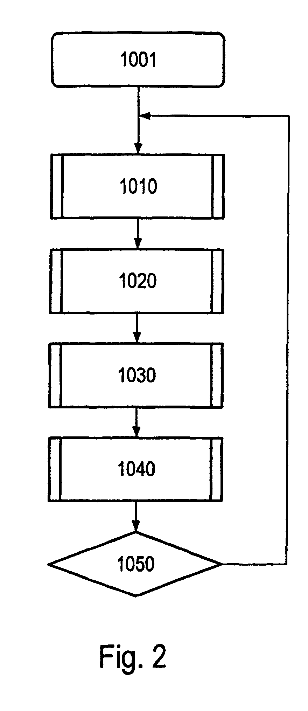

Eine einfache Steuerung und/oder Überwachung (Automatisierung) des technischen Prozesses 10 kann darin bestehen, dass das Ventil 15 hinsichtlich eines konstanten Füllstands F des Reaktors 11 gesteuert wird. FIG 2 zeigt für diese Automatisierung ein Flussdiagramm, das im Schritt 1001 beginnt.

Im Schritt 1010 sendet der Master 1 dem Slave 2 Digital- oder Analogwerte als Ausgabedaten, wie z. B. einen Maximalwert für den Füllstand F. Der Slave 2 antwortet mit dessen Eingabedaten in Form eines den Füllstand F des Reaktors 11 repräsentierenden Wert, der mittels des Füllstandsmessers 16 aufgenommenen worden ist.

Im Schritt 1020 sendet der Master 1 dem weiteren Slave 2' Digital- oder Analogwerte als Ausgabedaten in Form eines die Stellung des Ventils 15 bestimmenden Wertes. Der Slave 2' antwortet mit dessen Eingabedaten, z.B. mit einem die Ist-Durchflussmenge durch den Zufluss 12 repräsentierenden Wert.

Im Schritt 1030 erfolgt ein Kopieren der vom Master 1 empfangenen Daten in ein so genanntes Prozessabbild, d. h. in einen speziellen Speicherbereich, in dem die einzelnen Zustände des technischen Prozesses 10, insbesondere auch der Füllstand F des Reaktors 11 und die Stellung des Ventils 15, festgehalten sind. Im Schritt 1040 werden vom eigentlichen Automatisierungsprogramm aufgrund des Prozessabbildes die aktuellen Steuerinformationen für den technischen Prozess 10 bestimmt. Eine Steuerinformation ist dabei die Vorgabe einer neuen Stellung des Ventils 15 aufgrund eines gestiegenen oder gesunkenen Füllstands F im Reaktor 11.

Im Schritt 1050 wird vor den Schritt 1010 verzweigt, so dass sich eine so genannte Schleife ergibt. Die Zeitdauer, die sich für den Durchlauf der kompletten Schleife vom Schritt 1010 bis zum Schritt 1050 ergibt, wird als Zykluszeit bezeichnet. Sind in einem Kommunikationssystem mehr als die exemplarisch angenommen Slaves 2, 2' vorhanden, werden entsprechend weitere Schritte 1010, 1020 in die Schleife eingefügt, wodurch sich die Zykluszeit erhöht.

Wird jetzt erneut der Schritt 1020 ausgeführt, so enthalten die an den Slave 2' gesandten Ausgabedaten wieder einen die Stellung des Ventils 15 bestimmenden Analogwert. Die Menge des durch den Zufluss 12 einströmenden Materials wurde damit angepasst, so dass im Ergebnis der Füllstand F konstant bleibt.

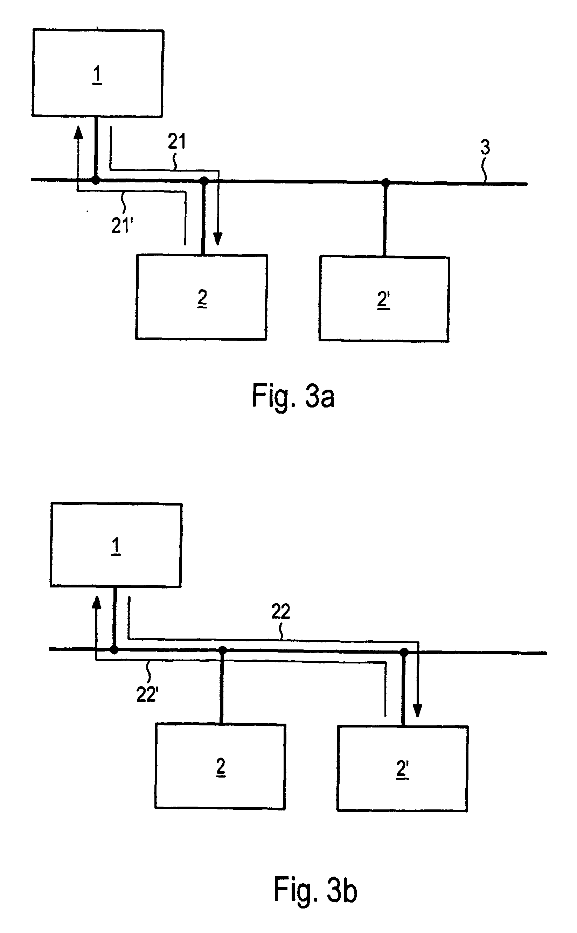

Die Figuren 3a und 3b zeigen den Datenaustausch zwischen den Kommunikationsteilnehmern 1, 2, 2' während der Ausführung der Schritte 1010 bis 1050. Dabei zeigt FIG 3a den Datenaustausch zwischen Master 1 und Slave 2 im Schritt 1010,während FIG 3b den Datenaustausch zwischen Master 1 und Slave 2 im Schritt 1020 zeigt.

FIG 3a zeigt ein Telegramm 21, mit dem der Master 1 im Schritt 1010 dem Slave 2 die jeweiligen Ausgabedaten sendet. Das Telegramm 21 veranlasst den Slave 2, seine Eingabedaten in einem Telegramm 21' an den Master 1 zu senden. Das Telegramm 21' enthält damit insbesondere den Füllstand F des Reaktors 11 repräsentierenden Wert, der mittels des Füllstandsmessers 16 aufgenommen wurde. Das Telegramm 21 erteilt implizit dem nicht aktiv sendeberechtigten Slave 2 eine Berechtigung zum Transfer der vom Master 1 angeforderten Daten 21'. Analog zeigt FIG 3b ein Telegramm 22, mit dem der Master 1 im Schritt 1020 dem Slave 2' die jeweiligen Ausgabedaten sendet. Das Telegramm 22 enthält damit insbesondere auch den die neue Stellung des Ventils 15 vorgebenden Wert. Das Telegramm 22 veranlasst den Slave 2' seine Eingabedaten in einem Telegramm 22' an den Master 1 zu senden.

Die Automatisierung des technischen Prozesses 10 erfordert somit eine Regelung, um den Füllstand F des Reaktors 11 konstant zu halten. Nachdem der Messwert des Füllstands F nur im Schritt 1010 abgetastet wird, handelt es sich um eine Abtastregelung. Die Qualität und/oder Stabilität einer Abtastregelung ist maßgeblich durch den Zeitabstand zwischen zwei Abtastungen eines Prozessparameters, hier des Füllstands F, bestimmt. Um eine stabile Regelung zu erreichen, erfordern die zugrundeliegenden mathematischen Regelungsmodelle eine Abtastung zu äquidistanten Zeitpunkten.

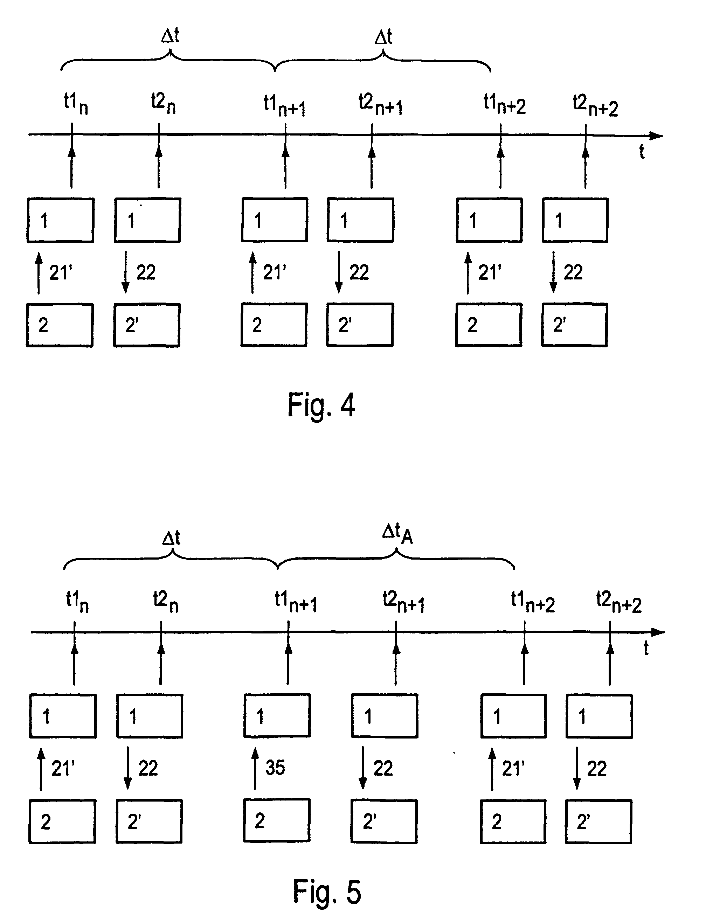

FIG 4 zeigt schematisch die auf einer Zeitachse aufgetragenen Zeitpunkte t1ₙ, t2ₙ, t1ₙ₊₁, t2ₙ₊₁, zu denen die Telegramme 21', 22 an bzw. von dem entsprechenden Slave 2, 2' übermittelt werden. Das Telegramm 21' enthält den vom Slave 2 an den Master 1 übermittelten aktuellen Füllstand F des Reaktors 11. Zu den Zeitpunkten t1ₙ, t1ₙ₊₁, t1ₙ₊₂ erfolgt damit ein Abtasten des Prozessparameters "Füllstand F". Das Telegramm 22 enthält die Vorgabe des Masters 1 an den Slave 2' hinsichtlich der neuen Stellung des Ventils 15.

Für eine stabile Regelung des Füllstands F ist maßgeblich, dass die Zeitspanne zwischen zwei aufeinander folgenden Zeitpunkten t1ₙ, t1ₙ₊₁ zu denen der Füllstand F abgetastet wird, konstant bleibt. Die Zeitdifferenz zwischen dem Zeitpunkt t1ₙ und t2ₙ₊₁, nämlich der Aufnahme des Füllstandes F bzw. der Ausgabe des daraus resultierenden Stellwertes an den Prozess 10, stellt eine Totzeit dar, die mathematisch ohne weiteres berücksichtigt und kompensiert werden kann.

Bei einer "normalen" Kommunikation lässt sich die Äquidistanz zwischen zwei aufeinander folgenden Zeitpunkten t1ₙ, t1ₙ₊₁ dadurch gewährleisten, dass die Dauer einzelner Kommunikationsvorgänge (21, 22, 21', 22') im Wesentlichen durch das übermittelte Datenvolumen bestimmt wird. Dieses Datenvolumen ist jedoch konstant, so dass sich auch konstante Zeiten für die Kommunikation selbst und mithin konstante Zeiten für die einzelnen Schritte 1010 bis 1050 (FIG 2) ergeben. In FIG 4 ist dies durch den konstanten Abstand zwischen den Zeitpunkten t1ₙ und t1ₙ₊₁ bzw. t1ₙ₊₁ und t1ₙ₊₂ veranschaulicht, der der konstanten Zeitspanne Δt entspricht.

Die Zeitspanne Δt bezeichnet die Dauer des Buszyklusses und entspricht der Zykluszeit. Während der Dauer eines Buszyklusses werden die Schritte 1010 bis 1050 (FIG 2) ausgeführt. Auch wenn der Zeitpunkt t1ₙ, t1ₙ₊₁ aufgrund der Festlegung des Zeitpunktes der Ausführung des Schrittes 1010 tatsächlich bereits innerhalb des Buszyklusses liegt, entspricht der Abstand von diesem Zeitpunkt t1ₙ, t1ₙ₊₁ bis zum Zeitpunkt t1ₙ₊₁ bzw. t1ₙ₊₂, der jeweils schon im folgenden Buszyklus liegt, genau der Dauer eines Buszyklusses Δt.

Diese durch die konstanten Datenmengen bedingten Umstände sind bereits bei nur einer Ausnahmekommunikation während eines Buszyklusses nicht mehr gegeben. Die Dauer einer Ausnahmekommunikation ist im Wesentlichen nicht vorhersehbar. Zumindest weicht die Dauer einer Ausnahmekommunikation mit einem Slave 2, 2' von der Dauer der Normalkommunikation - wie oben beschrieben - mit diesem Slave 2, 2' ab.

FIG 5 zeigt die Auswirkung einer Ausnahmekommunikation 35 auf die Dauer eines Buszyklusses. Die Ausnahmekommunikation findet im Zeitpunkt t1ₙ₊₁ statt. Eine Ausnahmekommunikation 35 ist dabei z.B. eine Diagnosemeldung, die der Slave 2 nach entsprechender (nicht dargestellter) Initiierung durch den Master 1 an diesen übermittelt. Im Falle einer Diagnosemeldung 35 vom Slave 2 an den Master 1 wird das eigentlich zu diesem Zeitpunkt t1ₙ₊₁ vom Slave 2 an den Master 1 zu übermittelnde Telegramm 21' (FIG 4) im aktuellen Zyklus ausgesetzt. Anstelle dessen wird als Ausnahmekommunikation 35 ein Diagnosetelegramm mit den Diagnosedaten an den Master 1 übermittelt. Die Datenmenge des Diagnosetelegramms 35 unterscheidet sich von der Datenmenge des ausgesetzten Telegramms 21'. Dadurch verlängert sich die Dauer des Buszyklusses. Damit geht einher, dass die Zeitspanne vom Zeitpunkt tₙ₊₁ bis zum Zeitpunkt tₙ₊₂ (Δt_{A}) größer ist als die Zeitspanne vom Zeitpunkt tₙ bis zum Zeitpunkt tₙ₊₁ (Δt). Eine Äquidistanz zwischen den Zeitpunkten tₙ, tₙ₊₁, tₙ₊₂, zu denen der Füllstand F des Reaktors 11 abgetastet wird, ist nicht mehr gewährleistet. Der aufgrund der Ausnahmekommunikation 35 verlängerte Buszyklus hat die Dauer Δt_{A}.

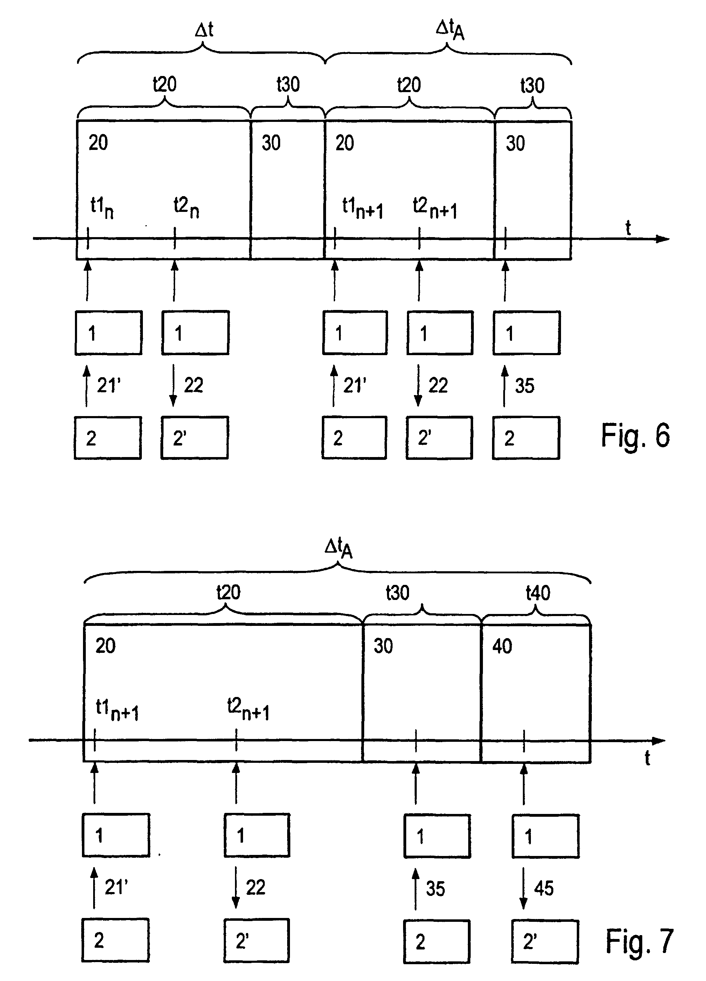

FIG 6 zeigt die Gewährleistung der Äquidistanz auch im Falle einer Ausnahmekommunikation 35 gemäß der Erfindung. Jeder Buszyklus Δt, Δt_{A} umfasst einen Normalkommunikationsteil 20 und einen Ausnahmekommunikationsteil 30. Der Ausnahmekommunikationsteil 30 ist im Anschluss an den Normalkommunikationsteil 20 vorgesehen. Die Dauer des Buszyklusses Δt, Δt_{A} (Buszykluszeit) ist vorgegeben und konstant. Die Dauer des Normalkommunikationsteils 20 ist mit t20 und die Dauer des Ausnahmekommunikationsteils 30 mit t30 bezeichnet.

Die Dauer t30 des Ausnahmekommunikationsteils 30 ergibt sich aus der Differenz zwischen Buszykluszeit und Dauer des Normalkommunikationsteils t20. Die Dauer t30 des Ausnahmekommunikationsteils 30 ist damit variabel. Gemäß einer Alternative ist die Dauer t30 des Ausnahmekommunikationsteils 30 vorgegeben. Die Dauer t30 des Ausnahmekommunikationsteils 30 ist in diesem Fall konstant.

Nur wenn eine Ausnahmekommunikation 35 vorgesehen ist, findet während der Dauer t30 des Ausnahmekommunikationsteils 30 ein Datenverkehr auf dem Bus 3 statt. Ist während eines Buszyklusses keine Ausnahmekommunikation 35 vorgesehen, wird die Zeit t30, die für den Ausnahmekommunikationsteil 30 zur Verfügung steht, ohne Aktion "verbraucht". Die Dauer Δt des Buszyklusses, in dem keine Ausnahmekommunikation 35 vorgesehen ist, entspricht damit der Dauer Δt_{A} des Buszyklusses, in dem eine Ausnahmekommunikation 35 erfolgt. Die Äquidistanz zwischen den Zeitpunkten tₙ, tₙ₊₁ und tₙ₊₂ ist aufgrund der Abwicklung von Ausnahmekommunikationen 35 während des Ausnahmekommunikationsteils 30 gewährleistet.

FIG 7 zeigt den Buszyklus mit Normalkommunikationsteil 20 und Ausnahmekommunikationsteil 30, wobei im Anschluss an die beiden Kommunikationsteile 20, 30 ein Sonderkommunikationsteil 40 vorgesehen ist, dessen Dauer mit t40 bezeichnet ist. Im Sonderkommunikationsteil 40 wird bedarfsweise Sonderkommunikationen 45 abgewickelt, die in nicht vorhersehbarem Umfang während eines Buszyklusses erforderlich wird. Ein Beispiel für eine Sonderkommunikation 45 ist ein so genanntes azyklisches Telegramm 45, mit dem ereignisgesteuert Daten an einen Slave 2, 2' gesendet werden. Ein weiteres Beispiel für eine Sonderkommunikation 45 sind Telegrammwiederholungen 45 im Falle von Übertragungsproblemen während der Normalkommunikation 20.

Obwohl in FIG 7 nur ein Buszyklus dargestellt ist, ist auch im Falle von Sonder- 40 und Ausnahmekommunikation 30 die Dauer des Buszyklusses (Buszykluszeit), also die Summe der Dauer von Normal- t20, Sonder- t40 und Ausnahmekommunikationsteil t30 konstant. Die Dauer des Normalkommunikationsteils t20 liegt im Wesentlichen mit dem Umfang der zu übertragenden Daten fest. Die Dauer des Ausnahmekommunikationsteils t30 ist vorgegeben und so bemessen, dass mindestens eine Ausnahmekommunikation 35 pro Buszyklus stattfinden kann, wobei eine gewisse "Zeitreserve" eingeplant wird. Die Dauer des Sonderkommunikationsteils t30 ist nicht vorgegeben. Der Zeitabschnitt innerhalb des Buszyklusses, der nicht für Normal- 20 und Ausnahmekommunikation 30 verbraucht wurde, steht für Sonderkommunikation 45 zur Verfügung. Kann in der zur Verfügung stehenden Zeit die Sonderkommunikation 45 nicht abgewickelt werden, wird sie solange bis zum jeweils nächsten Buszyklus zurückgestellt, bis ausreichend Zeit zur Abwicklung der Sonderkommunikation 45 zur Verfügung steht.

Somit ist ein Kommunikationsverfahren bereitgestellt, bei dem zyklisch Daten zwischen einzelnen Kommunikationsteilnehmern ausgetauscht werden. Der Datenaustausch erfolgt gemäß projektierter Kommunikationsbeziehungen zwischen den Kommunikationsteilnehmern. Während eines so genannten Buszyklusses konstanter Dauer werden einmal alle projektierten Kommunikationsbeziehungen abgewickelt. Mit einigen der Kommunikationsbeziehungen werden Abtastwerte, die z.B. für eine Regelung verwendet werden, übermittelt.

Zur Gewährleistung der Äquidistanz der Abtastungen werden die projektierten Kommunikationsbeziehungen während eines Normalkommunikationsteils des Buszyklusses abgewickelt. Ausnahme- bzw. Sonderkommunikationen werden unabhängig vom Normalkommunikationsteil in einem separaten Ausnahme- bzw. Sonderkommunikationsteil abgewickelt. Die Dauer des Buszyklusses ist so bemessen, das zusätzlich zum Normalkommunikationsteil noch Zeit für den Ausnahme- bzw. Sonderkommunikationsteil verbleibt. Ausnahme- bzw. Sonderkommunikation, die während der Dauer des Buszyklusses nicht abwickelbar ist, wird ausgesetzt und zur Abwicklung zu einem späteren Zeitpunkt vorgesehen.

## Patentansprüche

1. Verfahren zur zyklischen Kommunikation zwischen zur Steuerung oder Überwachung eines technischen Prozesses (10) vorgesehenen Kommunikationsteilnehmern (1,2,2') über einen Bus (3), bei dem während jeweils eines Buszyklusses für die Kommunikationsteilnehmer (1,2, 2') projektierte Kommunikationsbeziehungen abgewickelt werden, bei dem die projektierten Kommunikationsbeziehungen während einer Dauer (t20) eines Normalkommunikationsteils (20) des Buszyklusses abgewickelt werden, wobei die Zeitdifferenz zwischen Dauer des Buszyklusses und Dauer (t20) des Normalkommunikationsteils (20) für einen Ausnahmekommunikationsteil (30) zur Verfügung steht, und bei dem eine Ausnahmekommunikation (35) während der Dauer des Ausnahmekommunikationsteils (30) abgewickelt wird, **dadurch gekennzeichnet, dass** die Dauer (t30) des Ausnahmekommunikationsteils (30) konstant vorgebbar ist und die Ausnahmekommunikation (35) ausgesetzt wird, wenn die Dauer des Ausnahmekommunikationsteils (30) die vorgegebene Dauer (t30) übersteigt.

2. Kommunikationsverfahren nach Anspruch 1, bei dem die Ausnahmekommunikation (35) ausgesetzt wird, wenn die Summe der Dauer (t20) des Normalkommunikationsteils (20) und der Dauer (t30) des Ausnahmekommunikationsteils (30) die vorgegebene maximale Buszykluszeit übersteigt.

3. Kommunikationsverfahren nach Anspruch 1 oder 2, bei dem eine ausgesetzte Ausnahmekommunikation (35) für den nächsten Buszyklus eingeplant wird.

4. Kommunikationsverfahren nach einem der vorhergehenden Ansprüche, mit unter den Kommunikationsteilnehmern (1,2,2') mindestens einem Master (1) und mindestens einem Slave (2,2'), bei dem der Master (1) den mindestens einen Slave (2,2') entsprechend der projektierten Kommunikationsbeziehungen während eines Buszyklusses zumindest einmal anspricht und damit eine Reaktion des Slaves (2,2') auslöst, wobei die Dauer (t20) des Normalkommunikationsteils (20) durch die Dauer der Kommunikationen (21,21',22,22') entsprechend der projektierten Kommunikationsbeziehungen bestimmt ist.

5. Kommunikationsverfahren nach Anspruch 4, bei dem die Ausnahmekommunikation (35) durch den Master (1) bei dem mindestens einen Slave (2,2') initiiert wird.

6. Kommunikationsverfahren nach Anspruch 4 oder 5, bei dem die Ausnahmekommunikation (35) Diagnosedaten des angesprochenen Slaves (2,2') umfasst.

7. Kommunikationsverfahren nach einem der vorhergehenden Ansprüche, bei dem der Ausnahmekommunikationsteil (30) im Anschluss an den Normalkommunikationsteil (20) vorgesehen ist.

8. Kommunikationsverfahren nach einem der vorhergehenden Ansprüche, bei dem ein Sonderkommunikationsteil (40) zur Abwicklung von Sonderkommunikationen (45) vorgesehen ist.

9. Kommunikationsverfahren nach Anspruch 8, bei dem der Sonderkommunikationsteil (40) im Anschluss an den Ausnahmekommunikationsteil (30) vorgesehen ist.

10. Kommunikationsverfahren nach Anspruch 8 oder 9, bei dem die Sonderkommunikation (45) ausgesetzt wird, wenn die Summe der Dauer (t20) des Normalkommunikationsteils (20) und der Dauer (t30) des Ausnahmekommunikationsteils (30) und der Dauer (t40) des Sonderkommunikationsteils (40) die vorgegebene maximale Buszykluszeit übersteigt.

11. Kommunikationsverfahren nach Anspruch 10, bei dem eine ausgesetzte Sonderkommunikation (35) für den nächsten Buszyklus eingeplant wird.

## Claims

1. Method for cyclic communication between communication users (1,2,2') provided for control or monitoring of a technical process (10) over a bus (3), in which during one bus cycle in each case communication relationships projected for the communication user (1,2, 2') are handled, in which the projected communication relationships are handled during the duration (t20) of a normal communication part (20) of the bus cycle, where the time difference between the duration of the bus cycle and the duration (t20) of the normal communication part (20) is available for an exception communication part (30), and in which an exception communication (35) is handled during the duration of the exception communication part (30) **characterized in that** the duration (t30) of the exception communication part (30) can be specified as constant and the exception communication (35) is postponed if the duration of exception communication part (30) exceeds the prespecified duration (t30).

2. Communication method in accordance with Claim 1, in which the exception communication (35) is postponed if the sum of the duration (t20) of the normal communication part (20) and the duration (t30) of the exception communication part (30) exceeds the prespecified maximum bus cycle time.

3. Communication method in accordance with Claim 1 or 2, in which a postponed exception communication (35) is planned in for the next bus cycle.

4. Communication method in accordance with one of the previous claims, with the communication users (1,2,2') including at least one master (1) and at least one slave (2,2'), with the Master (1) addressing the at least one slave (2,2') according to the projected communication relationships during a bus cycle at least once and thereby initiating the reaction of the slave (2,2'), with the duration (t20) of the normal communication part (20) being determined by the duration of the communications (21,21',22,22') in accordance with the projected communication relationships.

5. Communication method in accordance with Claim 4, in which the exception communication (35) is initiated by the master (1) at the at least one slave (2,2').

6. Communication method in accordance with Claim 4 or 5, in which the exception communication (35) comprises diagnostic data of the addressed slaves (2,2').

7. Communication method in accordance with one of the previous claims, in which the exception communication part (30) is provided to follow on from the normal communication part (20).

8. Communication method in accordance with one of the previous claims, in which a special communication part (40) is provided for handling special communications (45).

9. Communication method in accordance with Claim 8, in which the special communication part (40) is provided to follow on from the exception communication part (30).

10. Communication method in accordance with Claim 8 or 9, in which the special communication (45) is deferred if the sum of the duration (t20) of the normal communication part (20) and the duration (t30) of the exception communication part (30) and the duration(t40) of the special communication part (40) exceeds the prespecified maximum bus cycle time.

11. Communication method in accordance with Claim 10, in which a deferred special communication (35) is planned in for the next bus cycle.

## Revendications

1. Procédé qui est destiné à la communication cyclique entre des utilisateurs (1, 2, 2') participant à des communications et prévus pour la commande ou la surveillance d'un processus technique (10) par l'intermédiaire d'un bus (3), dans lequel des liaisons de communication projetées pour les utilisateurs (1, 2, 2') sont exécutées pendant un cycle de bus à chaque fois, dans lequel les liaisons de communication projetées sont exécutées pendant une durée (t20) d'une partie de communication normale (20) du cycle de bus, la différence de temps entre la durée du cycle de bus et la durée (t20) de la partie de communication normale (20) étant disponible pour une partie de communication exceptionnelle (30), et dans lequel une communication exceptionnelle (35) est exécutée pendant la durée de la partie de communication exceptionnelle (30), **caractérisé par le fait que** la durée (t30) de la partie de communication exceptionnelle (30) peut être prescrite constante et que la communication exceptionnelle (35) est différée si la durée de la partie de communication exceptionnelle (30) dépasse la durée prédéterminée (t30).

2. Procédé de communication selon la revendication 1, dans lequel la communication exceptionnelle (35) est différée si la somme de la durée (t20) de la partie de communication normale (20) et de la durée (t30) de la partie de communication exceptionnelle (30) dépasse le temps de cycle de bus maximal prédéterminé.

3. Procédé de communication selon la revendication 1 ou 2, dans lequel une communication exceptionnelle (35) différée est planifiée pour le prochain cycle de bus.

4. Procédé de communication selon l'une des revendications précédentes, avec parmi les utilisateurs (1, 2, 2') au moins un maître (1) et au moins un esclave (2, 2'), dans lequel le maître (1) s'adresse au moins une fois pendant un cycle de bus à l'esclave ou à chaque esclave (2, 2') selon les liaisons de communication projetées et déclenche ainsi une réaction de l'esclave (2, 2'), la durée (t20) de la partie de communication normale (20) étant déterminée par la durée des communications (21, 21', 22, 22') selon les liaisons de communication projetées.

5. Procédé de communication selon la revendication 4, dans lequel la communication exceptionnelle (35) est lancée par le maître (1) pour l'esclave ou les esclaves (2, 2').

6. Procédé de communication selon la revendication 4 ou 5, dans lequel la communication exceptionnelle (35) comprend des données de diagnostic de l'esclave adressé (2, 2').

7. Procédé de communication selon l'une des revendications précédentes, dans lequel la partie de communication exceptionnelle (30) est prévue à la suite de la partie de communication normale (20).

8. Procédé de communication selon l'une des revendications précédentes, dans lequel une partie de communication spéciale (40) est prévue pour l'exécution de communications spéciales (45).

9. Procédé de communication selon la revendication 8, dans lequel la partie de communication spéciale (40) est prévue à la suite de la partie de communication exceptionnelle (30).

10. Procédé de communication selon la revendication 8 ou 9, dans lequel la communication spéciale (45) est différée si la somme de la durée (t20) de la partie de communication normale (20), de la durée (t30) de la partie de communication exceptionnelle (30) et de la durée (t40) de la partie de communication spéciale (40) dépasse le temps de cycle de bus maximal prédéterminé.

11. Procédé de communication selon la revendication 10, dans lequel une communication spéciale (35) différée est planifiée pour le prochain cycle de bus.
